**Europäisches Patentamt**

**European Patent Office**

**Office européen des brevets**

(11) Veröffentlichungsnummer: **0 374 877**
**A2**

# EUROPÄISCHE PATENTANMELDUNG

(21) Anmeldenummer: **89123542.6**

(22) Anmeldetag: **20.12.89**

(51) Int. Cl.⁵ **G07F 7/02, G07G 1/14**

(30) Priorität: **21.12.88 DE 3843093**

(43) Veröffentlichungstag der Anmeldung:
**27.06.90 Patentblatt 90/26**

(84) Benannte Vertragsstaaten:
**AT CH DE FR GB IT LI NL**

(71) Anmelder: **Sonnendorfer, Horst**
**Ringstrasse 17**
**D-8031 Eichenau(DE)**

Anmelder: **Wieth, Franz**
**Ringstrasse 17**
**D-8031 Eichenau(DE)**

(72) Erfinder: **Sonnendorfer, Horst**
**Ringstrasse 17**
**D-8031 Eichenau(DE)**
Erfinder: **Wieth, Franz**
**Ringstrasse 17**
**D-8031 Eichenau(DE)**

(74) Vertreter: **von Kirschbaum, Albrecht,**
**Dipl.-Ing.**
**Hermann-Ehlers-Strasse 21a**
**D-8034 Germering(DE)**

(54) **Einrichtung zum Erfassen von Kundenlaufdaten in Selbstbedienungsanlagen.**

(57) Zum Erfassen von Kundenlaufdaten in Selbstbedienungsanlagen ist zumindest an einer repräsentativen Anzahl von in solchen Selbstbedienungsanlagen benutzten Einkaufswagen jeweils entweder ein Einkaufswagen-Kennungsgeber zum Abgeben von Infrarot-Kennungsimpulsen oder vorzugsweise ein durch Infrarotlicht zur Abgabe der Infrarot-Kennungsimpulse aktivierbarer Einkaufswagen-Kennungsgeber angebracht. Ferner sind an allen hinsichtlich des Kundenlaufs interessierenden Abfragestellen einer solchen Anlage eine auf die von den Einkaufswagen-Kennungsgebern abgegebenen Infrarot-Impulse ansprechende Einrichtung oder zusätzlich noch eine das Infrarotlicht abgebende Einrichtung vorgesehen.

Ferner können jedoch auch an allen für den Kundenlauf repräsentativen Stellen einer solchen Anlage jeweils Infrarot-Kennungsimpulse abgebende Einrichtungen vorgesehen sein. Hierbei sind dann zumindest an einer repräsentativen Anzahl von in solchen Anlagen benutzten Einkaufswagen jeweils ein Speicher zum Zwischenspeichern der verschiedenen Infrarot-Kennungsdaten und zum Festhalten des genauen Empfangszeitpunkts vorgesehen.

Mit einer dieser beiden Einrichtungen lassen sich somit alle wesentlichen, für eine Kundenlaufstudie benötigten Daten schnell, sicher, zuverlässig und absolut objektiv erfassen. Mit Hilfe der erfaßten Daten und eines entsprechenden Programms können dann jederzeit Kundenlaufstudien erstellt werden.

## Einrichtung zum Erfassen von Kundenlaufdaten in Selbstbedienungsanlagen

Die Erfindung betrifft eine Einrichtung zum Erfassen von Kundenlaufdaten in Selbstbedienungsanlagen, wie Selbstbedienungs-Zentren, - Warenhäusern, -Märkten u.ä..

Um eine sogenannte Kundenlaufstudie von Selbstbedienungsanlagen erstellen zu können, müssen zuerst Untersuchungen in Form von Beobachtungen und Befragungen vorgenommen und durchgeführt werden, um auf diese Weise beispielsweise zu erfahren, welchen Weg der einzelne Kunde durch die Selbstbedienungsanlage nimmt, welche Haupt- und Nebengänge er auf seinem Weg aufsucht, ob er bestimmte, sogenannte Bedienungsshops frequentieren wird oder frequentiert hat, wie lange er sich in den einzelnen Gängen bzw. Abteilungen der Selbstbedienungsanlage aufgehalten hat, usw.

Diese zur Erstellung einer sogenannten Kundenlaufstudie unbedingt erforderlichen Daten werden bisher mit Hilfe einer mehr oder weniger großen Anzahl von Personen eine angemessene Zeitlang dadurch gesammelt, daß einzelne Kunden beobachtet bzw. insbesondere befragt werden, und daß dann die beobachteten bzw. erfragten Fakten in vorbereiteten Fragebögen oder Tabellen festgehalten bzw. aufgelistet werden oder beispielsweise auch auf Band gesprochen werden.

Allein die Vorbereitung sowie die anschließende Durchführung solcher Untersuchungen in Form von Beobachtungen, Befragun gen u.ä. ist nicht nur äußerst zeitaufwendig und i.a. auch personalintensiv, so daß allein zum Sammeln, Erfassen und Festhalten der für eine Kundenlaufstudie unbedingt erforderlichen Daten bereits sehr hohe Vorlaufkosten anfallen, sondern bei solchen Befragungen von Kunden ist man auch sehr von dem guten Willen und der Mitarbeit sowie von der Bereitschaft des einzelnen Kunden abhängig, auf die gestellten Fragen mit der erforderlichen Genauigkeit und Ausführlichkeit einzugehen.

Trotz des erforderlichen hohen Zeit- und gegebenenfalls Personalaufwands sind die auf diese Weise ermittelten Fakten und Ergebnisse immer noch mit einem mehr oder weniger großen Unsicherheitsfaktor behaftet; die anschließend zu erstellende bzw. erstellte Kundenlaufstudie kommt daher gegebenenfalls zu unkorrekten und nicht in vollem Umfang den tatsächlichen Gegebenheiten entsprechenden Ergebnissen.

Aufgabe der Erfindung ist es daher, eine Einrichtung zu schaffen, mit welcher präzise und objektiv, d.h. unbeeinflußt von der Kooperationsbereitschaftm, der Mitteilungsfreudigkeit sowie der Objektivität der einzelnen Kunden, in Selbstbedienungsanlagen, wie Selbstbedienungs-Zentren, - Warenhäusern, -Märkten, u.ä. Kundenlaufdaten jederzeit und wiederholt sicher und zuverlässig erfaßt werden können.

Zur Lösung dieser Aufgabe ist an allen oder zumindest an einer repräsentativen Anzahl von in derartigen Selbstbedienungsanlagen, wie Selbstbedienungs-Zentren, -Warenhäusern, - Märkten u.ä., benutzten Einkaufswagen jeweils ein Einkaufswagen-Kennungsgeber angebracht. Solche Kennungsgeber, die an geeigneten Stellen, beispielsweise an der Längsseite oder im Griffbereich eines Einkaufswagens angebracht sind, geben entweder, sobald die Einkaufswagen in Bewegung gesetzt werden und solange sie dann bewegt werden, die entsprechenden Kennungsdaten ständig ab, oder die Kennungsgeber werden gemäß einer bevorzugten Ausführungsform der Erfindung vorzugsweise durch gebündeltes Infrarotlicht aktiviert und geben erst dann vorzugsweise digital aufbereitete Infrarot-Kennungsimpulse als Kennungsdaten des jeweiligen Einkaufswagens ab.

Als Träger für die Kennungsgeber bieten sich die in solchen Selbstbedienungsanlagen ohnehin vorhandenen Einkaufswagen an, da sie praktisch von jedem Kunden, der solche Selbstbedienungs-. märkte aufsucht, im Eingangsbereich mitgenommen und während des gesamten Wegs durch die Selbstbedienungsanlage mitgeführt werden.

Gemäß der Erfindung sind ferner an allen interessierenden für den Kundenlauf repräsentativen Abfragestellen einer solchen Selbstbedienungsanlage, die beispielsweise am Anfang oder Ende von Haupt- oder Nebengängen beispielsweise von sogenannten Bedienungsshops Zugang zu speziellen Artikeln oder Artikelgruppen und auch an den Ein- und Ausgängen der verschiedenen Selbstbedienungsbereiche jeweils auf die Infrarot-Kennungsimpulse von den einzelnen Einkaufswagen-Kennungsgeber ansprechende Empfangseinrichtungen vorgesehen. Bei der bevorzugten Ausführungsform der Erfindung, bei welcher die Kennungsgeber der einzelnen Einkaufswagen erst durch Infrarotlicht aktiviert werden müssen, damit sie ihre jeweiligen Kennungsdaten abgeben, sind neben den Empfangseinrichtungen auch noch Einrichtungen zum Abgeben von gebündeltem Infrarotlicht vorgesehen. Von diesen Empfangseinrichtungen wird für eine weitere Datenverarbeitung neben den Einkaufwagens-Kennungsdaten auch noch der genaue Empfangszeitpunkt festgehalten, so daß beispielsweise die Verweildauer in bestimmten Bereichen oder bei speziellen Artikeln oder Artikelgruppen ermittelt werden kann.

Zur Lösung der eingangs angeführten Aufgabe können jedoch auch an allen hinsichtlich des Kundenlaufs repräsentativen und hinsichtlich der Verweildauer in bestimmten Bereichen interessierenden Stellen einer derartigen Selbstbedienungsanlage jeweils Infrarot-Kennungsimpulse abgebende Einrichtungen in Form von im Aufbau einfachen Impulsgebern vorgesehen sein. Die einzelnen an den vorgegebenen Stellen angebrachten Impulsgeber geben vorzugsweise jeweils digital aufbereitete Infrarot-Kennungsimpulse ab, welche den Kennungsnummern der einzelnen Einkaufswagen entsprechen.

Ferner sind an allen oder zumindest an einer repräsentativen Anzahl von in solchen Einkaufsanlagen benutzten Einkaufswagen jeweils eine Einrichtung zum Empfangen und zum Zwischenspeichern der jeweils abgegebenen Infrarot-Impulse vorgesehen. Außerdem wird in dem einfachen Speicher zum Zwischenspeichern der Daten noch der genaue Empfangszeitpunkt dieser Daten festgehalten.

Da sich in solchen Selbstbedienungsanlagen, wie vorstehend bereits ausgeführt, der größte Teil der Kunden zur Mitnahme von Artikeln eines der am Eingang oder im Bereich des Eingangs abgestellten Einkaufswagen bedient, eignet sich auch bei dieser erfindungsgemäßen Ausführungsform der Einkaufswagen sehr gut als Träger für eine die dezentral an den interessierenden Stellen abgegebenen Kennungsdaten aufnehmende Einrichtung sowie für den zum Zwischenspeichern der empfangenen Infrarot-Impulse und zum Festhalten der genauen Empfangszeiten unbedingt benötigten Speicher.

Bei dieser Ausführungsform der Erfindung brauchen daher nur am Ausgang, vorzugsweise im Bereich der Kassen, mittels entsprechender Abfrage-oder Abtasteinrichtungen die zwischengespeicherten Daten abgefragt und übernommen zu werden. Die Einkaufswagen-Kennungsdaten sowie die aus dem Zwischenspeicher entnommenen Daten können dann unmittelbar an einen Zentralspeicher weitergeleitet werden oder aber in einem örtlichen Speicher gesammelt und in regelmäßigen Abständen zur Auswertung und Weiterverarbeitung weitergeleitet werden bzw. entnommen werden. Nach der Entnahme der Daten aus dem an den einzelnen Einkaufswagen angebrachten Speicher wird dieser wieder gelöscht, so daß er dann sofort wieder einsatzbereit ist und erneut verwendet werden kann.

Somit lassen sich mit den erfindungsgemäßen Einrichtungen alle wesentlichen, beispielsweise für eine Kundenlaufstudie benötigten Daten schnell, sicher und zuverlässig erfassen. Hierbei sind die erhaltenen Daten, da sie von den mitunter subjektiven Aussagen von Kunden unbeeinflußt sind, absolut objektiv, da die benötigten Informationen an jeweils vorgegebenen Stellen lückenlos und praktisch unbeeinflußbar erhalten werden. Die erfaßten Kundenlaufdaten können zur weiteren Verarbeitung beispielsweise einer zentralen Datenverarbeitungsanlage zugeführt werden.

Da den dezentral erfaßten Daten jeweils der genaue Erfassungszeitpunkt zugeordnet ist, kann dann mit Hilfe eines entsprechenden Programms beispielsweise eine Kundenlaufstudie einschließlich der Verweilzeit in den einzelnen Bereichen bzw. bei oder vor einzelnen Artikeln oder Artikelgruppen jederzeit wieder erstellt werden.

## Ansprüche

1 Einrichtung zum Erfassen von Kundenlaufdaten in Selbstbedienungsanlagen, wie Selbstbedienungs-Zentren, -Warenhäusern, -Märkten u.ä., dadurch **gekennzeichnet**, daß an allen oder zumindest an einer repräsentativen Anzahl von in solchen Selbstbedienungsanlagen benutzten Einkaufswagen jeweils ein Einkaufswagen-Kennungsgeber zum Abgeben von Infrarot-Kennungsimpulsen angebracht ist, und daß an allen hinsichtlich des Kundenlaufs interessierenden Abfragestellen einer solchen Selbstbedienungsanlage jeweils eine auf die Infrarot-Kennungsimpulse von den einzelnen Einkaufswagen-Kennungsgebern ansprechende Empfangseinrichtung vorgesehen ist, in welcher für eine weitere Datenverarbeitung den Einkaufswagen-Kennungsdaten auch noch deren genauer Empfangszeitpunkt zugeordnet wird.

2. Einrichtung zum Erfassen von Kundenlaufdaten in Selbstbedienungsanlagen, wie Selbstbedienungs-Zentren, -Warenhäusern, -Märkten u.ä., dadurch **gekennzeichnet**, daß an allen oder zumindest an einer repräsentativen Anzahl von in solchen Selbstbedienungsanlagen benutzten Einkaufswagen jeweils ein durch gebündeltes Infrarotlicht zur Abgabe von Infrarot-Kennungsimpulsen aktivierbarer Einkaufswagen- Kennungsgeber angebracht ist, und daß an allen hinsichtlich des Kundenlaufs interessierenden Abfragestellen einer solchen Selbstbedienungsanlage jeweils eine das Infrarotlicht abgebende Einrichtung und jeweils eine auf die Infrarot-Kennungsimpulse von den einzelnen Einkaufswagen-Kennungsgebern ansprechende Empfangseinrichtung vorgesehen sind, in welcher für eine weitere Datenverarbeitung neben den Einkaufswagen-Kennungsdaten auch noch deren genauer Empfangszeitpunkt festgehalten wird

3. Einrichtung zum Erfassen von Kundenlaufdaten in Selbstbedienungsanlagen, wie Selbstbedienungs-Zentren, -Warenhäusern, -Märkten u.ä., dadurch **gekennzeichnet**, daß an allen hinsichtlich des Kundenlaufs und hinsichtlich der Verweildauer in bestimmten Bereichen interessierenden Stellen einer solchen Selbstbedienungsanlage jeweils eine Infrarot-Kennungsimpulse abgebende Einrichtung vorgesehen ist, und daß an allen oder zumindest an einer repräsentativen Anzahl von in solchen Selbstbedienungsanlagen benutzten Einkaufswagen jeweils eine Einrichtung zum Empfangen und zum Zwischenspeichern der jeweils abgegebenen Infrarot-Kennungsimpusle sowie zum Festhalten des genauen Empfangszeitpunkts vorgesehen ist.